(19) Europäisches Patentamt
European Patent Office
Office européen des brevets

(11) EP 3 095 150 B1

(12) FASCICULE DE BREVET EUROPEEN

(45) Date de publication et mention de la délivrance du brevet:
**25.04.2018 Bulletin 2018/17**

(21) Numéro de dépôt: **14827825.2**

(22) Date de dépôt: **12.12.2014**

(51) Int Cl.:
***H01M 8/1039*** *(2016.01)* ***H01M 8/1044*** *(2016.01)*
***H01M 8/1081*** *(2016.01)*

(86) Numéro de dépôt international:
**PCT/FR2014/053306**

(87) Numéro de publication internationale:
**WO 2015/107276 (23.07.2015 Gazette 2015/29)**

# (54) MEMBRANE POUR PILE A COMBUSTIBLE A MEMBRANE ECHANGEUSE DE PROTONS

MEMBRAN FÜR EINE BRENNSTOFFZELLE MIT PROTONENAUSTAUSCHMEMBRAN

MEMBRANE FOR A PROTON EXCHANGE MEMBRANE FUEL CELL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2014 FR 1450328**

(43) Date de publication de la demande:
**23.11.2016 Bulletin 2016/47**

(73) Titulaires:
- **Commissariat à l'Énergie Atomique et aux Énergies Alternatives 75015 Paris (FR)**
- **Université de Cergy-Pontoise 95302 Cergy-Pontoise Cedex (FR)**

(72) Inventeurs:
- **GUIMET, Adrien F-38000 Grenoble (FR)**
- **MORIN, Arnaud F-38100 Grenoble (FR)**
- **CHIKH, Linda F-78600 Maisons-laffite (FR)**
- **FICHET, Odile F-78300 Poissy (FR)**

(74) Mandataire: **Cabinet Laurent & Charras Le Contemporain 50 Chemin de la Bruyère 69574 Dardilly Cedex (FR)**

(56) Documents cités:
**WO-A1-2011/035795**

- **PAN H ET AL: "Proton exchange membranes based on semi-interpenetrating polymer networks of fluorine-containing polyimide and Nafion<(>R)", JOURNAL OF POWER SOURCES, ELSEVIER SA, CH, vol. 195, no. 10, 15 mai 2010 (2010-05-15) , pages 3077-3083, XP026854781, ISSN: 0378-7753 [extrait le 2009-12-01]**
- **CHIKH L ET AL: "(Semi-)Interpenetrating polymer networks as fuel cell membranes", JOURNAL OF MEMBRANE SCIENCE, ELSEVIER, vol. 368, no. 1-2, 15 février 2011 (2011-02-15), pages 1-17, XP027575120, ISSN: 0376-7388 [extrait le 2010-12-24]**
- **VIRGINIE DELHORBE ET AL: "Fluorohexane network and sulfonated PEEK based semi-IPNs for fuel cell membranes", JOURNAL OF MEMBRANE SCIENCE, ELSEVIER, vol. 389, 10 octobre 2011 (2011-10-10), pages 57-66, XP028394202, ISSN: 0376-7388, DOI: 10.1016/J.MEMSCI.2011.10.015 [extrait le 2011-10-15]**
- **PAN XIAO ET AL: "Physically stable and high performance Aquivion/ePTFE composite membrane for high temperature fuel cell application", JOURNAL OF MEMBRANE SCIENCE, vol. 442, 1 septembre 2013 (2013-09-01), pages 65-71, XP055139215, ISSN: 0376-7388, DOI: 10.1016/j.memsci.2013.04.014**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

L'objet de la présente invention concerne une membrane pour pile à combustible de type PEMFC (pile à combustible à membrane échangeuse de protons). Cette membrane échangeuse de protons comprend un mélange de polymères.
Le domaine d'utilisation de la présente invention se rapporte particulièrement à la conversion d'énergie chimique en énergie électrique et sous forme de chaleur.

### ART ANTERIEUR

Les piles à combustible, et notamment les PEMFC, sont relativement attractives eu égard à leur rendement théorique élevé et à la nature non polluante des sous-produits de réaction.
En outre, elles offrent une large gamme de puissance, ce qui rend leur utilisation envisageable aussi bien pour des applications stationnaires, telles que des installations de forte puissance pour la production d'électricité, que pour les véhicules électriques, ou tout autre dispositif nécessitant une source d'énergie autonome (groupe électrogène, dispositif électronique portable, etc.).
De manière générale, une pile à combustible à membrane échangeuse de protons fonctionne par oxydation du combustible (hydrogène ou méthanol par exemple) à l'anode, et par transfert de protons du compartiment anodique vers le compartiment cathodique au travers de la membrane échangeuse de protons. Les électrons résultant de la réaction d'oxydation sont réacheminés vers la cathode via un circuit externe.
Ainsi, l'énergie chimique peut être convertie en énergie électrique et en chaleur.
Les piles à combustibles PEMFC présentent de nombreux avantages tels que l'absence de sensibilité au dioxyde de carbone ; la faible température de fonctionnement qui permet un démarrage rapide ; la souplesse d'utilisation et de gestion thermique ; la réduction des problèmes de corrosion des électrodes ; et l'absence de fuite de l'électrolyte.
Cependant, elles présentent également des inconvénients tels que par exemple, une grande sensibilité au monoxyde de carbone ; une faible température de fonctionnement (inférieure à 100°C) qui ne permet pas une bonne valorisation de la chaleur ; et un catalyseur (généralement à base de platine) et une membrane onéreux.
De manière préférentielle, la membrane (électrolyte polymère) d'une PEMFC est imperméable aux gaz. Elle présente avantageusement de bonnes propriétés mécaniques et une conduction protonique élevée. En outre, la réalisation de formes adaptées aux différentes applications doit être possible, afin de pouvoir notamment réaliser des systèmes minces (quelques microns d'épaisseur). Enfin, la membrane est en polymère électrochimiquement et chimiquement stable.
Il peut notamment s'agir de membranes polymères à base d'ionomères de type perfluorosulfoné (PFSA), tel que le Nafion® de Dupont ou l'Aquivion® de Solvay Specialty Polymers. Dans ces ionomères perfluorosulfonés, la conductivité protonique de la membrane est assurée par les groupements $-SO_3H$ (fonction acide sulfonique). Cependant, ces membranes présentent des inconvénients en raison de leur perméabilité au méthanol et à l'hydrogène. En outre, leurs propriétés mécaniques se dégradent au-delà de leur température optimale de fonctionnement (80°C).
Ceci est particulièrement contraignant pour le domaine automobile par exemple. En effet, pour ce type d'application, une PEMFC fonctionnant entre -30 et 120°C, et en présence de gaz faiblement humidifiés (entre 0 et 50% d'humidité relative) est requise. Le document WO 2011/035795 décrit une membrane pour PEMFC pouvant comprendre un polymère sulfoné et un polymèrepolybenzimidazole. Pan et al. ont décrit une membrane composite pour PEMFC (Journal of Power Sources, 2010, 195, 3077-3083). Cette membrane comprend un réseau de polymères semi-interpénétrés obtenu par réticulation d'une polyimide fluorée (FPI) en présence de Nafion®.
Les performances d'une PEMFC sont également liées aux problématiques suivantes :

- la présence de monoxyde de carbone (CO) entraine généralement l'empoisonnement des catalyseurs. Lorsque l'hydrogène (combustible) est obtenu par reformage, il contient généralement des traces de monoxyde de carbone. La présence de CO entraine une baisse de l'efficacité du catalyseur à base de platine qui adsorbe celui-ci. Les performances de la PEMFC sont ainsi amoindries. D'autre part, l'adsorption du CO sur le catalyseur à base de platine est favorisée à faible température, mais défavorisée à haute température en raison de l'entropie négative de la réaction d'adsorption. Ainsi, la tolérance au CO augmente avec la température. La dégradation des performances de la PEMFC liée à l'empoisonnement au CO peut ainsi être nettement atténuée à haute température (environ 140°C).
- la gestion thermique d'une pile PEMFC est plus compliquée à basse température, étant donné que la pile produit entre 40 et 50% de son énergie sous forme de chaleur. Par conséquent, lorsque la pile fonctionne à basse température, de grandes quantités d'énergie doivent être dissipées. Au contraire, lorsque la pile fonctionne à des températures de l'ordre de 120 à 140°C, la chaleur produite par la pile permet de maintenir le système en température et

nécessite des systèmes de refroidissement plus petits. Ce point est particulièrement important pour une application dans l'industrie automobile. En outre, pour des températures supérieures à 100°C, la chaleur produite peut également être utilisée à d'autres fins (chauffage en mode cogénération par exemple).

- l'humidification de la membrane est primordiale à basse température, étant donné que les membranes de type PFSA nécessitent d'être hydratées constamment. Les auxiliaires nécessaires à l'humidification compliquent et diminuent la fiabilité du système. L'humidification est nécessaire étant donné que la conductivité protonique de la membrane augmente avec la quantité d'eau contenue dans la matrice polymère qui augmente elle-même avec la quantité d'eau à l'extérieur de la membrane (humidité relative). Cette humidification est d'autant plus complexe à réaliser et à gérer et demande d'autant plus d'énergie que la température est élevée.

En résumé, il existe un besoin de développer une membrane pour PEMFC pouvant être utilisée aussi bien à basse température qu'à haute température avec des gaz faiblement hydratés (<50% d'humidité relative).

Afin de remédier à ces problèmes, le Demandeur a mis au point une membrane échangeuse de protons présentant une meilleure stabilité thermomécanique à haute température que les membranes de l'art antérieur, et ce sans altérer la conductivité protonique de ladite membrane.

Le problème technique résolu par la présente invention est donc d'améliorer les propriétés thermomécaniques d'une membrane pour pile à combustible, pouvant ainsi être utilisée dans une gamme de températures plus importante que les membranes de l'art antérieur, permettant ainsi une utilisation à faible humidité relative.

## EXPOSE DE L'INVENTION

Le Demandeur a développé une membrane échangeuse de protons comprenant un mélange de deux polymères aux propriétés distinctes : un polymère échangeur de protons fluoré et un polymère aromatique selon les revendications déposés. Ainsi, l'association de ces deux types de polymères confère au matériau final des propriétés thermomécaniques améliorées par rapport aux membranes de l'art antérieur, et ce tout en contribuant à sa conductivité protonique.

Cette combinaison permet ainsi d'utiliser la membrane échangeuse de protons selon la présente invention à plus haute température. En outre, la membrane présente des performances, en termes de conductivité protonique, au moins similaires à celles des membranes fluorées de l'art antérieur.

Plus précisément, la présente invention concerne une membrane pour pile à combustible à membrane échangeuse de protons comprenant, en poids par rapport au poids total de la membrane :

- 50 à 95% de polymère A, avantageusement de 70 à 95% ; et
- de 5 à 50% de polymère B, avantageusement de 5 à 30% ;

A étant un polymère fluoré échangeur de cations ; et
B étant un polymère aromatique hydrocarboné distinct du polymère A, et comprenant au moins un cycle aromatique sur sa chaîne polymérique.

Les polymères A et B forment un mélange. Ils ne sont pas réticulés entre eux. Typiquement, la membrane selon l'invention résulte du mélange des polymères A et B préalablement formés indépendamment l'un de l'autre. Le Demandeur considère en effet que la réticulation, entre eux, des polymères A et B peut diminuer les propriétés de conduction ionique, notamment lorsqu'elle est réalisée via les groupements sulfonates.

Cette membrane échangeuse de protons est avantageusement constituée des polymères A et B. En d'autres termes et de manière avantageuse, la membrane ne comprend pas de constituants autres que les polymères A et B.

Par « polymère échangeur de cations », on entend un polymère comprenant des groupements aptes à échanger des cations ou des protons.

Par « polymère fluoré », on entend un polymère dont l'unité de répétition (unité monomérique) comprend des atomes de fluor. Il est constitué d'unités monomériques issues de la polymérisation de monomères. Il peut également s'agir d'un polymère perfluoré, c'est-à-dire un polymère dont tous les groupes C-H d'au moins une unité monomérique sont intégralement substitués par des groupes C-F.

Par « polymère aromatique », on entend un polymère comprenant, sur sa chaîne principale, la répétition d'un motif contenant au moins un cycle comportant un système $\pi$ conjugué, formé de liaisons doubles. Ces cycles aromatiques peuvent être séparés par une chaîne carbonée et/ou un hétéroatome de type oxygène (O) ou soufre (S) par exemple.

L'aromaticité du polymère B n'est pas nécessairement présente sur l'intégralité de sa chaîne principale. Elle concerne au moins un groupement d'au moins une unité de répétition, se trouvant sur la chaîne principale du polymère.

En d'autres termes, le polymère B peut être défini ainsi :

B = (C-D)p, C et D étant une ou deux unités de répétition (unités monomériques) du polymère B, au moins C ou D comprenant un cycle aromatique sur la chaîne polymérique principale du polymère B, p étant un nombre entier.

Typiquement, le polymère B peut comprendre un groupement arène sur sa chaîne principale, c'est-à-dire un dérivé d'un composé aromatique hydrocarboné monocycle ou polycycle dont au moins deux atomes de carbone sont sur la chaîne principale du polymère B.

Le polymère B est un polymère sulfoné, c'est-à-dire un polymère comprenant des groupements $-SO_3H$.

Le polymère A est par définition échangeur de cations, il permet ainsi d'assurer la conductivité protonique de la membrane. Il s'agit d'un ionomère c'est-à-dire un polymère comprenant des groupements ionisables et/ou ioniques.

Le polymère A est un polymère fluoré, avantageusement perfluoré. En d'autres termes, et selon un mode de réalisation préféré, il ne comprend pas de groupements C-H, ceux-ci étant substitués par des groupements C-F.

Le polymère A comprend des groupements choisis dans le groupe comprenant les groupements $-SO_3^-X^+$ ; $-PO_3^-X^+$ ; et $-COO^-X^+$ ; X étant un atome d'hydrogène ou un cation.

Dans le cadre de la présente invention, X représente avantageusement un atome d'hydrogène, un cation métallique d'un alcalin ou d'un alcalino-terreux, et plus préférentiellement les cations $Na^+$ et $K^+$. X peut également représenter un ammonium, de préférence un ammonium quaternaire.

Le cas échéant, avant utilisation en tant que membrane dans une pile à combustible, les groupements X de la membrane selon la présente invention, sont avantageusement convertis en atomes d'hydrogène, notamment par traitement avec un acide de Bronsted.

Le polymère A peut notamment être un polymère perfluoré sulfonique. Il peut être de formule suivante :

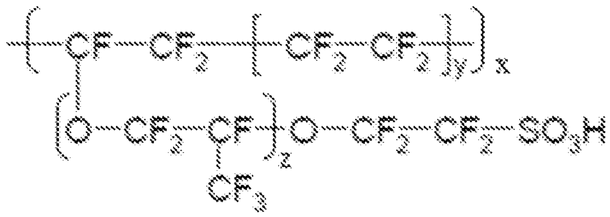

avec x = 100 à 1000 ; y = 3,5 à 7,5 et z = 0 à 3.

Le poids moléculaire du polymère A peut notamment être compris entre 10 000 et 10 000 000 g/mol, avantageusement entre 100 000 et 1 000 000 g/mol.

A titre d'exemple, le polymère A peut notamment être l'un des polymères perfluorosulfoné PFSA commercialisés sous les noms Nafion® (Du Pont) ; 3M Membrane (3M) ; Aciplex™ (Asahi Glass) ; et Aquivion® (Solvay Specialty Polymers, par exemple Aquivion® D75-20BS et Aquivion® D70-20BS). Il s'agit préférentiellement d'un polymère de type Aquivion®.

Ces ionomères peuvent se présenter sous forme de dispersion dans un solvant, notamment une dispersion aqueuse.

Le Nafion® est un polymère perfluorosulfoné PFSA dont le numéro CAS est : 31175-20-9.

Ces ionomères se différencient notamment par la longueur de la chaîne pendante fluorée et la distance moyenne entre chaînes pendantes fluorées. Comme déjà indiqué, ils sont souvent commercialisés sous forme de dispersion, ce qui peut nécessiter une étape préalable d'élimination du solvant afin de récupérer l'ionomère sous forme solide en vue de l'associer avec le polymère aromatique hydrocarboné B.

Ainsi, par exemple, le polymère B peut ne pas être soluble dans la dispersion du polymère A. Dans ce cas, un solvant commun aux deux polymères permet de réaliser le mélange, d'où la nécessité de sécher la dispersion du polymère A.

Le polymère A peut également se trouver en suspension/dispersion dans un mélange de solvant dans lequel le polymère B est soluble. Dans ce cas, il n'est pas nécessaire de sécher le polymère A.

Selon un autre mode de réalisation, un solvant additionnel (co-solvant) peut être ajouté à la solution de polymère A, afin que le polymère B soit soluble dans la solution résultante de polymère A dans le mélange solvant/co-solvant.

En outre, le polymère A peut également se présenter sous forme de poudre ou de granulé.

En ce qui concerne le polymère B, il peut présenter un domaine de stabilité thermique et mécanique relativement important eu égard à la présence de cycles aromatiques sur sa chaîne principale. En effet, ce polymère est avantageusement stable jusqu'à 220°C, voire 250°C.

Cette température de 250°C correspond à la température de relaxation mécanique. Le domaine de stabilité mécanique peut ainsi s'étendre jusqu'à 220°C alors que le domaine de stabilité thermique du polymère B peut s'étendre au-delà de 250°C.

Le polymère B peut notamment être choisi dans le groupe comprenant notamment les poly(aryl sulfone) ; poly(aryl éther cétone) ; poly(imide) ; poly(aryl carbonate) ; poly(aryl éther éther cétone) ; poly(aryl ether cétone cétone) ; et poly(aryl ether sulfone)...

Le poids moléculaire du polymère B peut notamment être compris entre 1 000 et 200 000 g/mol, avantageusement entre 10 000 et 70 000 g/mol. Il comprend avantageusement entre 5 et 500 motifs de répétition (unités monomériques), plus avantageusement encore entre 10 et 50.

Il peut notamment s'agir d'un polymère dont un des motifs de répétition (unités monomériques) comprend au moins un groupement aryle sur la chaîne principale du polymère, et pouvant être choisi dans le groupe comprenant le poly(bisphénol A carbonate) ; les poly(éther cétone) ; les poly(éther cétone cétone) ; les poly(éther éther cétone) ; les poly(sulfone) ; les poly(phényl sulfone) ; les poly(éther imide) ; les poly(2,6-diméthyloxyde de phénylène) ; les poly (éther sulfone) ; les poly(amide imide) et notamment les poly(amide imide) distribués par Solvay sous le nom commercial Torlon® ; les poly(pyromellitimide) et notamment le kapton® ; et les poly(benzimidazole).

Le polymère B peut avantageusement être choisi dans le groupe comprenant les polyarylènes ; les polyarylènes éthers ; les polyarylènes éthers fluorés ; les polysulfones ; les poly(benzimidazoles) ; les poly(éther cétone), poly(éther cétone cétone), les poly(éther éther cétone) ; les poly(éther sulfone) ; les poly(éther imide) ; les polycarbonate ; le poly-2,6-diméthyloxyde de phénylène ; la polyamide-imide ; et le polypyromellitimide.

Comme déjà indiqué, le polymère B comprend des groupements $-SO_3H$. Le cas échéant, il peut être obtenu par fonctionnalisation avec des groupements $-SO_3H$ d'un des polymères mentionnés ci-dessus.

La conductivité protonique du polymère B peut être améliorée par fonctionnalisation avec des groupements de type imidazolium, acide carboxylique (-COOH), acide phosphonique ($-PO_3H$), ou acide sulfonique ($-SO_3H$). Par exemple, les polyarylènes peuvent notamment être fonctionnalisés par un agent de sulfonation, tel que l'acide chlorosulfonique, introduisant ainsi des groupements acide sulfonique sur les noyaux aromatiques du polymère B. La substitution est réalisée sur le cycle aromatique (aryle) se trouvant sur la chaîne principale du polymère.

Le gonflement en milieu aqueux d'une membrane polymérique échangeuse de protons est généralement proportionnel au nombre de groupements échangeurs ($SO_3H$ par exemple). Or, selon la famille de polymère mis en oeuvre, l'aptitude à gonfler en milieu aqueux peut être également synonyme de fragilité mécanique à l'état sec dans certains cas. Il s'agit donc de trouver un compromis entre la conductivité protonique et les propriétés mécaniques de la membrane.

L'homme du métier saura ajuster le degré de fonctionnalisation du polymère B en fonction du domaine d'application de la membrane selon la présente invention. Ainsi, de manière avantageuse, le polymère B peut comprendre entre 1 et 4 substitutions par unité de répétition (monomère) sur sa chaîne polymérique principale. De manière générale, chaque unité de répétition peut comprendre une substitution au minimum et au maximum 2 substitutions par cycle aromatique. Ainsi, chaque unité de répétition comprend typiquement entre 4 et 6 cycles aromatiques, et entre 2 et 4 substitutions.

Selon un mode de réalisation particulier, le polymère B peut notamment être un composé choisi dans le groupe comprenant les composés des formules suivantes, ainsi que leurs dérivés (Tg = température de transition vitreuse) :

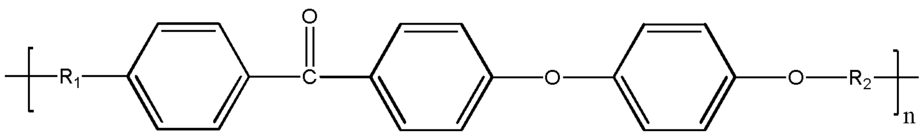

Poly(Aryl Ether Ether Cétone)
Tg = 150°C

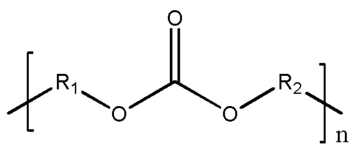

Poly(Aryl Carbonate)
Tg = 150°C

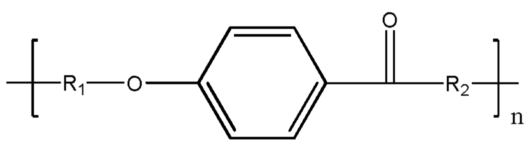

Poly(Aryl Ether Cetone)
Tg = 160°C

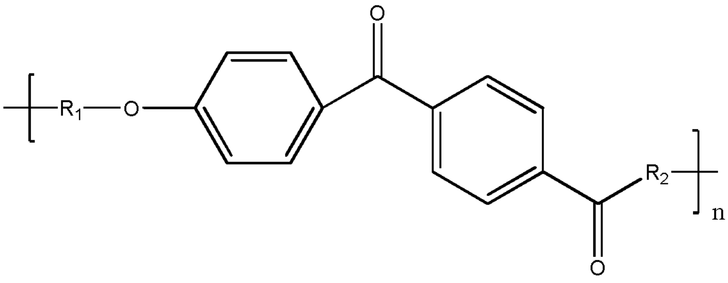

Poly(Aryl Ether Cetone Cetone)
Tg = 160°C

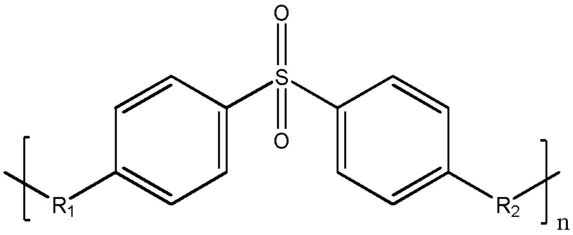

Poly(Aryl Sulfone)
Tg = 190°C

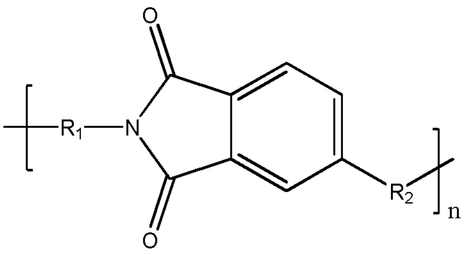

Poly(Ether Imide)
Tg = 210°C

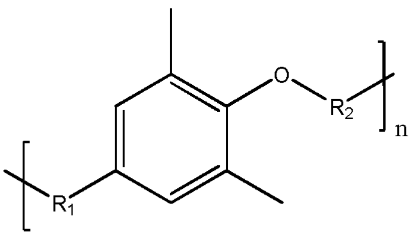

Poly(2,6-diméthyloxyde de phénylène)
Tg = 210°C

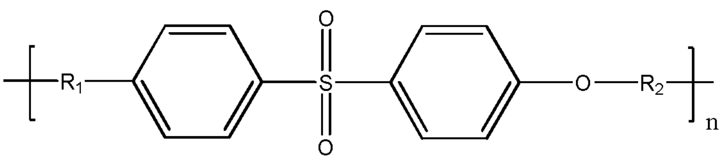

Poly(Aryl Ether Sulfone)
Tg = 220°C

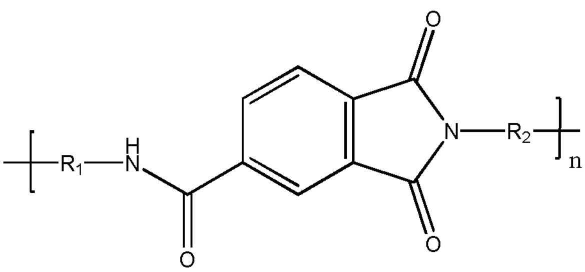

Poly(Amide Imide)
Tg = 260°C

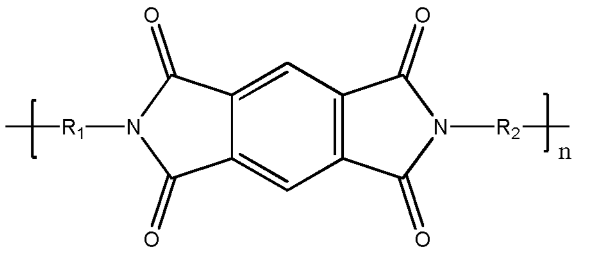

Poly(Pyromellitimide)
Tg = 370°C

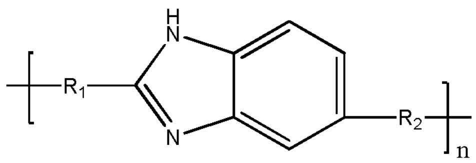

Poly(Benzimidazole)
Tg = 390°C

Avec $R_1$ = O, $SO_2$ $CH_2$, $CH_2$-$CH_2$, cycle aromatique comprenant 5 ou 6 atomes de carbone, NH, $NR^3$ ($R^3$ = groupement alkyle linéaire ou ramifié comprenant 1 à 4 atomes de carbone, de préférence le méthyle)
et $R_2$ = O, $SO_2$, $CH_2$, $CH_2$-$CH_2$, cycle aromatique comprenant 5 ou 6 atomes de carbone, NH, $NR^3$ ($R^3$ = groupement alkyle linéaire ou ramifié comprenant 1 à 4 atomes de carbone, de préférence le méthyle).

Comme déjà indiqué, le polymère B comprend nécessairement au moins un groupement aromatique sur sa chaîne principale. Ainsi, lorsque le polymère B est le poly(aryl carbonate) illustré ci-dessus, $R_1$ ou $R_2$ est nécessairement un cycle aromatique.

Selon un mode de réalisation particulier, le polymère aromatique hydrocarboné B est un polymère sulfoné, et plus avantageusement le poly(éther éther cétone sulfoné) (S-PEEK).

Le PEEK (numéro CAS : 29658-26-2) peut comprendre des groupements échangeurs de cations de type -$SO_3$-X ou -C(=O)-O-X ; X étant préférentiellement un proton ou un cation métallique ($K^+$, $Na^+$ par exemple).

Le S-PEEK est un polymère sulfoné, il peut ainsi être un polymère comprenant la répétition de l'unité suivante :

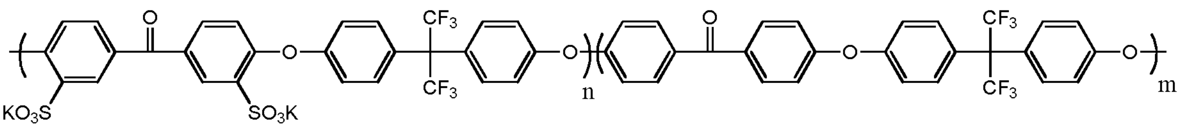

Avec n = 0,3 à 1 et m = 0,7 à 0 (m + n = 1)

La capacité d'échange ionique (CEI) d'un polymère indique sa capacité à échanger ses protons. Elle est reliée aux propriétés d'absorption dans l'eau et de conductivité protonique. A titre d'exemple, la CEI est avantageusement comprise entre 0,9 et 3 mmol/g pour le polymère A ou le polymère B.

Le polymère B présente une température de transition vitreuse avantageusement comprise entre 150 et 400°C.

Il s'agit de la température à laquelle le polymère subit une transition mécanique, et donc à laquelle il change de propriétés mécaniques. Elle peut ainsi permettre de déterminer la gamme d'utilisation des polymères.

S'agissant du polymère A, sa température de transition vitreuse peut être avantageusement comprise entre 80 et 130°C, notamment pour du PFSA (polymère perfluorosulfoné tel que le Nafion®).

La présente invention concerne également le procédé de préparation de la membrane décrite ci-avant. Il comprend les étapes suivantes :

- préparation d'une solution de polymères A et B dans au moins un solvant ;
- mise en forme de la membrane à partir de la solution des polymères A et B ;
- évaporation du au moins un solvant ;
- optionnellement, régénération (ou échange) de la membrane par immersion de la membrane dans une solution acide ;
- séchage de la membrane.

Le cas échéant, l'étape de régénération (ou échange) permet de substituer les cations métalliques du polymère A par des atomes d'hydrogène. En outre, cette étape peut également permettre de régénérer les fonctions -$SO_3$H qui auraient pu réagir avec les éventuelles fonctions amine du solvant utilisé pour préparer la solution de polymères A et B, mais aussi pour régénérer les ponts $SO_2$-$SO_2$ éventuellement formés lors de l'évaporation thermique du solvant. En outre, cette étape peut également permettre d'éliminer les éventuelles impuretés cationiques présentent dans la membrane.

Le traitement dans une solution acide est avantageux lorsque le polymère A comprend des groupements X n'étant pas des atomes d'hydrogène.

Le traitement dans une solution acide est avantageusement mis en oeuvre dans une solution acide dont le pH est inférieur à 2.

L'homme du métier saura mettre en oeuvre la solution acide adéquate en faisant appel à ses connaissances générales.

Selon un mode de réalisation particulier, la solution de polymères A et B peut être obtenue par addition de polymère B dans une solution de polymère A. Le polymère B ajouté peut se présenter sous forme de solution ou solide.

Selon un autre mode de réalisation particulier, la solution de polymères A et B peut être obtenue par addition de polymère A dans une solution de polymère B. Le polymère A ajouté peut se présenter sous forme de solution ou solide.

De manière avantageuse, une solution de polymère B est ajoutée dans une solution A, car celle-ci est typiquement moins visqueuse et donc plus facile à ajouter en goutte à goutte.

A titre d'exemple, la solution des polymères A et B peut être préparée par addition de polymère B sous forme solide dans une solution de polymère A dans le DMAc (N,N-diméthylacétamide), étant donné que le polymère B est soluble dans le DMAc.

Le cas échéant, les deux solutions de polymères peuvent être préparées dans une gamme de concentration avantageusement comprise entre 100 et 500 mg/mL. Elle peut être comprise entre 100 et 400 mg/mL, de l'ordre de 400 mg/mL.

De manière générale, le mélange des polymères A et B est homogénéisé par agitation mécanique de la solution.

Le solvant mis en oeuvre dans le procédé selon la présente invention peut notamment être choisi dans le groupe comprenant la N-méthyl-2-pyrrolidone (NMP) ; le N,N-diméthylacétamide (DMAc) ; le diméthylformamide (DMF) ; le diméthylsulfoxyde (DMSO) ; et le mélange eau/alcool (par exemple dans un rapport en poids 50/50, notamment lorsque l'alcool est un alcool primaire ou secondaire comprenant 1 à 3 atomes de carbone tel que le méthanol, l'éthanol, le propanol ou l'isopropanol).

De manière générale, la solution de polymères A et B peut être préparée à une température comprise entre la température ambiante et 60°C.

La mise en forme de la membrane peut être réalisée selon les techniques faisant partie des connaissances générales de l'homme du métier et particulièrement selon une technique choisie dans le groupe comprenant la coulée/évaporation ; l'enduction ; le dépôt par pulvérisation ; le dépôt par flexographie ; le dépôt par enduction centrifuge (« *spin coating* ») ; et le dépôt par sérigraphie.

La solution peut notamment être déposée sur un substrat en verre, en polytétrafluoroéthylène (Téflon®) ou sur une plaque en quartz.

De manière générale, l'enduction peut être réalisée à l'aide d'un couteau d'épaisseur variable sur une plaque de verre. La membrane résultante (après séchage) présente une épaisseur avantageusement comprise entre 10 et 200 micromètres, plus avantageusement encore entre 10 et 50 micromètres.

L'homme du métier saura ajuster l'épaisseur du couteau en fonction de l'épaisseur de la membrane qu'il cherche à réaliser. L'épaisseur du couteau dépend notamment de la viscosité de la solution et de la vitesse de balayage de l'enduction.

Comme déjà dit, la solution de polymères A et B peut également être déposée par une méthode de type spray, pulvérisation, flexographie, spin coating ou sérigraphie de façon à obtenir une couche mince dont l'épaisseur est avantageusement comprise entre 1 micromètre et 1 millimètre.

Ces techniques sont adéquates pour former la membrane selon l'invention, dont l'épaisseur est, comme déjà indiqué, avantageusement comprise entre 10 et 50 micromètres, et encore plus avantageusement entre 10 et 20 micromètres.

De manière avantageuse, l'étape d'évaporation du solvant peut être réalisée à une température comprise entre 80 et 150°C, notamment dans une étuve ventilée. L'étuve peut également être sous vide à une pression avantageusement comprise entre 1mbar et 1bar.

Il est également envisageable de séquencer l'évaporation en plusieurs étapes et à différentes températures. Par exemple, entre 1 et 72 heures à température ambiante puis entre 1 et 24 heures à 60-80°C, puis entre 1 et 24 heures à 100-150°C.

Après l'étape d'évaporation, le procédé peut comprendre une phase de traitement thermique. Ce traitement thermique est avantageusement réalisé à une température comprise entre 180 et 250°C, entre 15 minutes et 24 heures. Il est mis en oeuvre à une température supérieure à la température de transition vitreuse du polymère A, et selon les cas au-dessus de la Tg de certains polymères B. Ce traitement optionnel permet d'augmenter la mobilité des chaînes des polymères et ainsi de favoriser leur mise en forme. La mise en forme des polymères au sein de la membrane peut notamment influencer les propriétés et les performances lorsque la membrane est utilisée dans une pile à combustible.

Selon la technique de mise en forme utilisée, le procédé de préparation de la membrane peut également

comprendre une étape de décollement de la membrane. Ainsi, lorsque cela s'avère nécessaire, la membrane peut être décollée de son support par immersion dans de l'eau ultrapure dont la température est comprise entre la température ambiante et 50°C, pendant une durée généralement d'au moins 10 minutes, avantageusement comprise entre 15 et 1440 minutes, plus avantageusement de l'ordre de 15 minutes.

L'homme du métier saura ajuster le volume d'eau et le temps d'immersion, notamment en fonction de l'épaisseur de la membrane, de la nature du support, et de la température de traitement de la membrane (étape d'évaporation des solvants).

Cette immersion permet ainsi d'éliminer au moins une partie des solvants.

Pour faciliter le décollement de la membrane, il est également possible de traiter les plaques de verre utilisées par silylation de celles-ci ou par le dépôt d'un spray hydrophobe de type fluoré.

Une fois formée, la membrane de polymères A et B peut être avantageusement régénérée ou échangée en acide par immersion dans une solution acide.

La solution acide permettant la régénération des sites sulfoniques présente un pH avantageusement inférieur à 2. Il s'agit préférentiellement d'une solution aqueuse d'un acide dont la concentration est comprise entre 0,5 et 12 mol/L, avantageusement une solution d'acide chlorhydrique. Il ne s'agit pas d'une étape de dopage étant donné que l'acide n'est pas censé rester dans la membrane. Comme déjà indiqué, cette étape a notamment pour objectif de remplacer les éventuels cations présents dans la membrane, présents en raison des impuretés ou alors du procédé même de fabrication, par des protons ou de régénérer les fonctions $-SO_3H$ ayant potentiellement réagi entre elles ou avec le solvant.

Il peut notamment s'agir d'une solution aqueuse d'acide chlorhydrique 1M. D'autres acides peuvent également être utilisés, notamment l'acide sulfurique ou l'acide nitrique. L'homme du métier saura ajuster la concentration en acide notamment en fonction de la nature des groupements échangeurs de cations du polymère A.

Comme déjà indiqué, la solution acide mise en oeuvre présente un pH avantageusement inférieur à 2. La durée de la régénération acide est avantageusement comprise entre 15 minutes et 48 heures. D'autre part, régénération ou l'échange est avantageusement réalisé dans une solution dont la température est comprise entre la température ambiante et 60°C.

Après régénération, la membrane peut être lavée, notamment dans l'eau.

En ce qui concerne le séchage de la membrane, il est avantageusement réalisé sous vide c'est-à-dire à une pression de 10 mbar à 1 bar, préférentiellement 100 à 400 mbar et de préférence à une température comprise entre la température ambiante et 80°C. La durée de séchage peut être comprise entre 1 et 96 heures, préférentiellement 6 et 48 heures, 12 et 24 heures. La membrane peut être séchée à température et humidité relative ambiantes.

A l'issue du traitement de régénération (immersion dans une solution acide), la membrane est préférentiellement lavée afin d'éliminer toute trace résiduelle d'acide.

La membrane est ensuite séchée.

Le séchage permet également d'éliminer les traces de solvant organique.

La membrane ainsi obtenue est autosupportée.

Elle peut être directement incorporée dans les dispositifs appropriés à toutes les applications nécessitant une membrane échangeuse cationique, c'est-à-dire pour les piles à combustible PEMFC (« *proton exchange membrane fuel cell* ») ou DMFC (« *direct methanol fuel cell* »), les électrolyseurs, les capteurs, les supercapacités, les batteries.

Elle peut être utilisée pour un fonctionnement à moyenne température (100-120°C). De manière générale, la température de fonctionnement de la membrane selon la présente invention peut être comprise entre -10 et 130°C.

Comme déjà indiqué, la membrane - objet de la présente invention, présente un domaine de stabilité mécanique supérieur à celui des membranes de l'art antérieur. En effet, la chute du module de conservation apparaît généralement autour de 120°C dans le cas de la membrane selon l'invention alors qu'elle est généralement de l'ordre de 90°C pour une membrane en PFSA commercial (polymère perfluorosulfoné tel que le Nafion®).

En outre, la température de relaxation mécanique est généralement de l'ordre de 150 à 160°C pour la membrane selon la présente invention, alors qu'elle est détectée à 120°C pour une membrane en PFSA commercial.

L'invention et les avantages qui en découlent ressortiront mieux des figures et exemples suivants donnés afin d'illustrer l'invention et non de manière limitative.

## DESCRIPTION DES FIGURES

La figure 1 illustre le module de conservation en fonction de la température de membranes selon la présente invention par rapport à trois membranes de l'art antérieur.

La figure 2 illustre la tangente $\alpha$ en fonction de la température pour des membranes selon la présente invention par rapport à trois membranes de l'art antérieur.

La figure 3 illustre les thermogrammes enregistrés par analyse thermogravimétrique pour des membranes selon la présente invention par rapport à trois membranes de l'art antérieur.

La figure 4 illustre le taux d'absorption dans l'eau à 15°C d'une membrane selon la présente invention par rapport à deux membranes de l'art antérieur, en fonction de la proportion massique en polymère A.

La figure 5 illustre le taux d'absorption dans l'eau à 80°C d'une membrane selon la présente invention par rapport à deux membranes de l'art antérieur, en fonction de la proportion massique en polymère A.

La figure 6 illustre la conductivité protonique à 19°C de membranes selon la présente invention par rapport à deux membranes de l'art antérieur, en fonction de la proportion massique en polymère A.

La figure 7 illustre les courbes de polarisation à 60°C d'un assemblage membrane électrodes selon l'invention par d'un assemblage membrane électrodes selon l'art antérieur.

La figure 8 illustre les courbes de polarisation à 90°C d'un assemblage membrane électrodes selon l'invention par d'un assemblage membrane électrodes selon l'art antérieur.

La figure 9 illustre les courbes de polarisation à 105°C d'un assemblage membrane électrodes selon l'invention par d'un assemblage membrane électrodes selon l'art antérieur.

## EXEMPLES DE REALISATION DE L'INVENTION

1/ Préparation de membranes polymériques selon l'invention et selon l'art antérieur

Le tableau 1 récapitule la composition de chacune des membranes préparées. Les membranes INV-1 à INV-5 sont des membranes selon la présente invention alors que les membranes CE-1, CE-2, et CE-3 sont des contre exemples selon l'art antérieur.

Tableau 1 : Composition des membranes préparées.

| Membrane | INV-1 | INV-2 | INV-3 | INV-4 | INV-5 | CE-1<br>CE-3 | CE-2 |
|---|---|---|---|---|---|---|---|
| Polymère A (% en poids) | 70 | 75 | 80 | 85 | 90 | 100 | 0 |
| Polymère B (% en poids) | 30 | 25 | 20 | 15 | 10 | 0 | 100 |
| Les membranes INV-1 à INV-5 ont été préparées selon le mode opératoire suivant. | | | | | | | |

Le polymère A (INV-1 à INV-5 et CE-1) utilisé est obtenu à partir d'une dispersion aqueuse commerciale d'Aquivion® D79-20BS de chez Solvay Specialty Polymers contenant 20% massique de polymère, ayant une masse équivalente à 790 g/eq correspondant à une capacité d'échange ionique (CEI) égale à 1,27 meq/g.

Le polymère A utilisé pour le contre-exemple CE-3 est le Nafion® (CAS : 31175-20-9).

Avant sa mise en oeuvre, le polymère A est séché dans une étuve à 60°C pendant 15 heures.

La membrane craquelée résultante est ensuite broyée au mortier de manière à obtenir une poudre. Cette poudre est séchée sous vide à 50°C jusqu'à ce que l'analyse thermogravimétrique montre que la masse est constante et qu'il n'y a plus de traces de l'eau qui était éventuellement contenue dans le polymère initial.

Le polymère B mis en oeuvre ci-après est le S-PEEK (poly(éther éther cétone sulfoné) de chez ERAS Labo, France). Il présente une masse molaire de 16100 g/mol, et une capacité d'échange ionique (CEI) de 1,45 mmol/g. Il est composé à 50% molaire d'unités sulfonées réparties de manière aléatoire.

*1-1/Mélange des précurseurs*

Pour un mélange Aquivion®/S-PEEK (A/B) en rapport massique 80/20 (INV-3) :

800 mg d'Aquivion® solide sont dissous dans 4 mL de DMAc (N,N-diméthylacétamide) sous agitation magnétique à température ambiante pendant 1 heure.

La solution d'Aquivion® est ensuite filtrée à l'aide d'un micropore dont la taille de pore est 0,2 micromètres.

200 mg de S-PEEK sont dissous dans 1 mL de DMAc sous agitation magnétique à température ambiante pendant 1 heure.

La solution de S-PEEK est ensuite filtrée à l'aide d'un micropore dont la taille de pore est 0,2 micromètres.

La solution de S-PEEK est ensuite ajoutée goutte à goutte à la solution d'Aquivion®. Le mélange est homogénéisé pendant 20 minutes sous agitation magnétique à température ambiante, puis filtré à l'aide d'un micropore dont

la taille de pore est 0,2 micromètres.

*1-2/ Mise en forme de la membrane*

La membrane polymérique A/B est mise en forme par coulée/évaporation après dépôt de la solution dans une boîte de Pétri.

*1-3/ Evaporation des solvants*

L'ensemble est ensuite traité thermiquement pendant 24 heures à 120°C afin d'éliminer les solvants.

*1-4/ Décollement de la membrane*

La membrane est décollée de son support par immersion dans 2 litres d'eau ultrapure à température ambiante pendant 15 minutes, de manière à recouvrir la surface de la membrane jusqu'à ce que la membrane se décolle. Cette immersion permet ainsi d'éliminer les éventuels résidus de solvants.

*1-5/ Echange ou régénération de la membrane*

La membrane autosupportée est immergée dans 1,5 L d'acide chlorhydrique (HCl, 1M, température ambiante) pendant 24 heures afin notamment de réaliser l'échange de groupements $-SO_3X$ sur le polymère (B) aromatique hydrocarboné sulfoné qui se trouvent éventuellement sous la forme de cations ou qui ont éventuellement réagi entre eux.
A l'issue du traitement acide, la membrane est immergée pendant 24 heures dans de l'eau ultrapure afin d'éliminer les résidus d'acide.

*1-6/ Séchage de la membrane*

La membrane est ensuite séchée, sous vide, à 50°C et pendant 2 jours, puis à 80°C pendant 2 jours. Ce n'est qu'à l'issue du séchage que la membrane est caractérisée.
La membrane obtenue ci-dessus est référencée INV-3 (ratio A/B = 80/20).
Selon ce protocole, différentes membranes ont été synthétisées.
La membrane INV-1 (ratio A/B = 70/30) est synthétisée à partir d'un mélange de 700 mg d'Aquivion® solide dissous dans 3,5 mL de DMAc et 300 mg de S-PEEK dissous dans 1,5 mL de DMAc.
La membrane INV-2 (ratio A/B = 75/25) est synthétisée à partir d'un mélange de 750 mg d'Aquivion® solide dissous dans 3,75 mL de DMAc et 250 mg de S-PEEK dissous dans 1,25 mL de DMAc.
La membrane INV-4 (ratio A/B = 85/15) est synthétisée à partir d'un mélange de 850 mg d'Aquivion® solide dissous dans 4,25 mL de DMAc et 150 mg de S-PEEK dissous dans 0,75 mL de DMAc.
La membrane INV-5 (ratio A/B = 90/10) est synthétisée à partir d'un mélange de 900 mg d'Aquivion® solide dissous dans 4,5 mL de DMAc et 100 mg de S-PEEK dissous dans 0,5 mL de DMAc.

2/ Propriétés des membranes

*2-1/ Analyse thermomécanique dynamique (DMTA)*

L'analyse thermomécanique dynamique des membranes INV-2, INV-3 et INV-4 a été réalisée à l'aide d'un appareil DMTA Q800 (TA Instruments).
La mesure est réalisée à une fréquence de 1 Hz et à une vitesse de chauffe de 3°C/minute. Ces mesures montrent une augmentation du domaine de stabilité du module de conservation, de 100 à 125°C. Simultanément, la température de relaxation mécanique est augmentée de 30°C par rapport à celle d'une membrane d'Aquivion® commerciale, pour une gamme de composition comprise en 90 et 70 % massique en Aquivion® (figures 1 et 2).
La figure 2 représente le graphe de la tangente $\alpha$ en fonction de la température. La tangente $\alpha$ (tan $\alpha$ = E'/E") correspond au rapport entre le module de conservation (E') et le module de perte (E"), ces modules étant mesurés en fonction de la température lors de l'analyse DMTA.

*2-2/ Analyse thermogravimétrique (TGA)*

Les thermogrammes des membranes Aquivion®/S-PEEK (INV-1, INV-3, et INV-5) ont été enregistrés à l'aide d'un appareil ATG Q50 (TA Instruments).

Les mesures sont réalisées sous air synthétique ayant un débit en gaz de 60 mL/minute et à une vitesse de chauffe de 20°C/minute.

Ces mesures montrent que la stabilité thermique du polymère A (Aquivion®) est conservée dans le mélange avec le polymère B (S-PEEK). En effet, toutes les membranes élaborées présentent une stabilité thermique jusqu'à 350°C. La température de début de dégradation des matériaux est relevée pour une perte de masse de 5% (figure 3).

*2-3/ Absorption dans l'eau ultrapure à 15 et 80°C*

Les taux d'absorption des matériaux sont déterminés par pesée réalisée après différents temps d'immersion ($m_t$) dans l'eau ultrapure à 15 et 80°C à partir d'un échantillon initialement sec de masse $m_0$.

Les taux d'absorption est calculé de la manière suivante :

$$\text{Taux de gonflement (\% en masse)} = [(m_t - m_0)/m_0] \times 100$$

La membrane 80/20 (INV-3) présente un taux d'absorption deux fois supérieur à celui d'une membrane de polymère B, S-PEEK (CE-2) à 15°C (42 % pour la membrane 80/20 contre 23 % pour la membrane S-PEEK) et une valeur légèrement supérieure à celle d'une membrane de polymère A, Aquivion® (CE-1) (42 % pour la membrane 80/20 contre 35 % pour la membrane Aquivion®) (figure 4).

La membrane 80/20 (INV-3) présente un taux d'absorption inférieur à celui d'une membrane de polymère B, S-PEEK (CE-2) à 80°C (65 % pour la membrane 80/20 contre 80 % pour la membrane S-PEEK) et une valeur supérieure à celle d'une membrane de polymère A, Aquivion® (65 % pour la membrane 80/20 contre 48 % pour la membrane Aquivion®) (figure 5).

*2-4/ Conductivité protonique à 19°C*

Chaque échantillon est immergé dans 1 L d'eau ultrapure à température ambiante pendant 24 heures.

Une fois gonflé, un échantillon d'épaisseur « e » et de surface « S » est découpé, puis placé dans une cellule VSP entre deux électrodes d'inox reliées à un spectromètre d'impédance électrochimique (Autolab Frequency Responce Analyser System - AUT30.FRA-AUTOLAB, Echo Chemie, B.V.).

La conductivité $\sigma$ est calculée avec la formule suivante :

$\sigma = e/(S \times R)$ où R est la résistance ohmique de la membrane

L'amplitude de la perturbation est de 10 mV pour une fréquence variant de 0,01 Hz à 100 kHz.

La valeur de la résistance est mesurée à l'interception des valeurs d'impédance à hautes fréquences avec l'axe réel sur les courbes de Nyquist.

La conductivité protonique a été mesurée à 19°C sur des membranes préalablement gonflées à saturation dans l'eau ultrapure à température ambiante. Elle est de l'ordre de 0,9 mS/cm pour la membrane INV-3 (80/20), de 1 mS/cm pour la membrane INV-4 (85/15), de 0,7 mS/cm pour la membrane INV-2 (75/25)

En revanche, la conductivité protonique de la membrane CE-2 (polymère B, S-PEEK) est égale à 0,1 mS/cm. La conductivité protonique de la membrane CE-1 (polymère A, Aquivion®) est égale à 2,6 mS/cm.

Les conductivités protoniques augmentent avec l'augmentation de la proportion massique en polymère A (Aquivion®) (figure 6).

*2-5/ Test en pile*

La membrane est découpée aux dimensions de 5 x 5 $cm^2$, puis montée dans une monocellule de test de pile à combustible.

La membrane est placée dans un assemblage membrane électrodes (AME) constitué de deux électrodes commerciales Johnson Mattey (0,4 mg/$cm^2$ de Pt) de 2,8 x 2,8 $cm^2$ (dimensions standard pour un test en cellule de 5 $cm^2$).

L'AME est inséré entre deux joints en téflon® tramé d'épaisseur 75 micromètres, et la différence d'épaisseur entre l'électrode et le joint est compensée par deux cales en Nafion® RE 212 de 50 micromètres d'épaisseur. La monocellule de test est ensuite fermée et serrée à 5 puis 7 N.m.

La pile est démarrée à température ambiante sous flux d'azote hydraté (100 % d'humidité relative) à 300 mL/min, sous une pression totale de 1 bar, puis sous flux $H_2/O_2$ hydraté (100 % d'humidité relative) à 666 mL/min.

Une tension de 0,5 V pendant 16 heures est appliquée afin de bien hydrater la membrane et de la stabiliser avant d'effectuer différentes conditions de mesures.

Dans ces conditions, la pile produit 5,2 A à 0,5 V.

La cellule est alors chauffée progressivement jusqu'à 60°C, la pression est augmentée à 1,41 bar, et le débit des gaz est diminué à 50 mL/minute.

Dans ces conditions, la pile produit 13,6 A à 0,5 V (figure 7).

La cellule est alors passée à 90°C à 50 % d'humidité relative et sous une pression de 1,76 bar.

Dans ces conditions, la pile produit 18,3 A à 0,5 V (figure 8).

La cellule est alors passée à 105°C à 50 % d'humidité relative et sous une pression de 1,76 bar.

Dans ces conditions, la pile produit 15,2 A à 0,5 V (figure 9).

Ces différents points de fonctionnement montrent que la membrane de l'invention permet de faire fonctionner la pile aussi bien à des températures dites classiques, autour de 60°C, avec des performances au moins similaires aux membranes de référence actuelles, qu'à des températures plus élevées telles que de 90 à 105°C où les performances sont supérieurs à celles des membranes de référence actuelles.

## Revendications

1. Membrane pour pile à combustible à membrane échangeuse de protons comprenant, en poids par rapport au poids total de la membrane, un mélange de :

   - 50 à 95% de polymère A ; et
   - 5 à 50% en poids de polymère B ;

   A étant un polymère fluoré échangeur de cations, comprenant des groupements choisis dans le groupe comprenant les groupements $-SO_3-X$ ; $-PO_3-X$ ; et -COO-X ; X étant un atome d'hydrogène ou un cation ; et
   B étant un polymère aromatique hydrocarboné distinct du polymère A, et comprenant au moins un cycle aromatique sur sa chaîne polymérique, B étant fonctionnalisé avec des groupements acide sulfonique $-SO_3H$.

2. Membrane pour pile à combustible à membrane échangeuse de protons selon la revendication 1, ***caractérisée* en ce que** le polymère A présente un poids moléculaire compris entre 10 000 et 10 000 000 g/mol, et **en ce que** le polymère B présente un poids moléculaire compris entre 1 000 et 200 000 g/mol.

3. Membrane pour pile à combustible à membrane échangeuse de protons selon la revendication 1 ou 2, ***caractérisée* en ce que** le polymère A est un polymère perfluoré sulfonique de formule :

   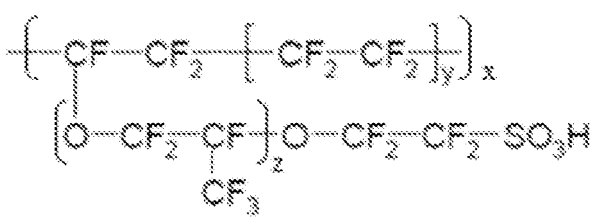

   avec x = 100 à 1000 ; y = 3,5 à 7,5 et z = 0 à 3.

4. Membrane pour pile à combustible à membrane échangeuse de protons selon l'une des revendications 1 à 3, ***caractérisée* en ce que** le polymère B est choisi dans le groupe comprenant les polyarylènes ; les polyarylènes éthers ; les polyarylènes éthers fluorés ; les polysulfones ; les polybenzimidazoles ; les poly(éther cétone), poly(éther cétone cétone), les poly(éther éther cétone) ; les poly(éther sulfone) ; les poly(éther imide) ; les polycarbonate ; le poly-2,6-diméthyloxyde de phénylène ; la polyamide-imide ; le polypyromellitimide.

5. Membrane pour pile à combustible à membrane échangeuse de protons selon l'une des revendications 1 à 4, ***caractérisée* en ce que** la membrane comprend 70 à 95% en poids de polymère A et de 5 à 30% en poids de polymère B.

6. Procédé de préparation de la membrane objet de l'une des revendications 1 à 5, comprenant les étapes suivantes :

   - préparation d'une solution de polymères A et B dans au moins un solvant ;
   - mise en forme de la membrane à partir de la solution de polymères A et B ;

- évaporation du au moins un solvant ;
- séchage de la membrane.

7. Procédé selon la revendication 6, ***caractérisé* en ce que** le solvant est choisi dans le groupe comprenant la N-méthyl-2-pyrrolidone ; le N,N-diméthylacétamide ; le diméthylformamide ; le diméthylsulfoxyde ; et les mélanges eau/alcool.

8. Procédé selon l'une des revendications 6 à 7, ***caractérisé* en ce que** la mise en forme de la membrane est réalisée selon une technique choisie dans le groupe comprenant la coulée/évaporation ; l'enduction ; le dépôt par pulvérisation ; le dépôt par flexographie ; le dépôt par enduction centrifuge ; et le dépôt par sérigraphie.

9. Procédé selon l'une des revendications 6 à 8, ***caractérisé* en ce que**, préalablement à l'étape de séchage, la membrane est immergée dans une solution acide, puis lavée dans l'eau.

10. Procédé selon la revendication 9, ***caractérisé* en ce que** la solution acide présente un pH inférieur à 2, et **en ce que** la durée d'immersion est comprise entre 15 minutes et 48 heures.

11. Procédé selon l'une des revendications 9 ou 10, ***caractérisé* en ce que** la solution acide est une solution d'acide chlorhydrique dont la concentration est comprise entre 0,5 et 12 mol/L.

**Patentansprüche**

1. Membran für eine Brennstoffzelle mit Protonenaustauschmembran, die nach Gewicht, bezogen auf das Gesamtgewicht der Membran, die folgende Mischung umfasst:

   - 50 bis 95% des Polymers A; und
   - 5 bis 50 Gewichts-% des Polymers B;

   wobei es sich bei A um ein fluoriertes Kationenaustauscher-Polymer handelt, das Gruppierungen umfasst, die aus der Gruppe umfassend die Gruppierungen $-SO_3-X$, $-PO_3-X$, und -COO-X ausgewählt werden; wobei X ein Wasserstoffatom oder ein Kation ist; und
   wobei es sich bei B um ein vom Polymer A verschiedenes aromatisches Kohlenwasserstoff-Polymer handelt, das mindestens einen aromatischen Ring an seiner Polymerkette umfasst, wobei B mit den Sulfonsäure-SO3H-Gruppierungen funktionalisiert wird.

2. Membran für eine Brennstoffzelle mit Protonenaustauschmembran nach Anspruch 1, **dadurch gekennzeichnet, dass** das Polymer A ein Molekulargewicht zwischen 10.000 und 10.000.000 g/mol aufweist und das Polymer B ein Molekulargewicht zwischen 1.000 und 200.000 g/mol aufweist.

3. Membran für eine Brennstoffzelle mit Protonenaustauschmembran nach Anspruch 1 oder 2, **dadurch gekennzeichnet, dass** das Polymer A ein perfluoriertes Sulfonsäurepolymer ist, mit der Formel:

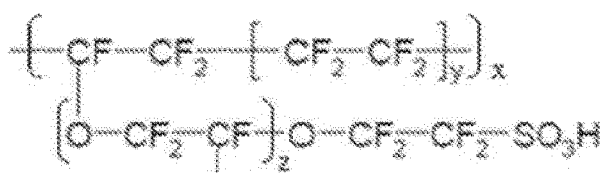

   mit x = 100 bis 1.000 ; y = 3,5 bis 7,5 und z = 0 bis 3.

4. Membran für eine Brennstoffzelle mit Protonenaustauschmembran nach irgendeinem der Ansprüche 1 bis 3, **dadurch gekennzeichnet, dass** das Polymer B aus der Gruppe ausgewählt wird, zu der die Polyarylene, Polyarylenether, fluorierte Polyarylenether, Polysulfone, Polybenzimidazole, Poly(etherketon), Poly(etherketonketon), Poly(etheretherketon), Poly(ethersulfon), Poly(etherimid), die Polykarbonate, Poly-2,6-Phenylendimethyloxyd, Polyamidimid und Polypyromellitimid gehören.

5. Membran für eine Brennstoffzelle mit Protonenaustauschmembran nach einem der Ansprüche 1 bis 4, **dadurch gekennzeichnet, dass** die Membran 70 bis 95 Gewichts-% Polymer A und 5 bis 30 Gewichts-% Polymer B enthält.

6. Verfahren zur Herstellung der Membran, die Gegenstand eines der Ansprüche 1 bis 5 ist, das die folgenden Schritte umfasst:

   - Herstellung einer Lösung der Polymere A und B in mindestens einem Lösungsmittel;
   - Formung der Membran mittels der Lösung der Polymere A und B;
   - Verdampfung des mindestens einen Lösungsmittels;
   - Trocknen der Membran.

7. Verfahren nach Anspruch 6, **dadurch gekennzeichnet, dass** das Lösungsmittel aus der Gruppe ausgewählt wird, zu der N-methyl-2-pyrrolidon; N,N-dimethylacetamid; Dimethylformamid; Dimethylsulfoxyd und Wasser/Alkohol-Mischungen gehören.

8. Verfahren gemäß einem der Ansprüche 6 bis 4, **dadurch gekennzeichnet, dass** die Formung der Membran nach einer Technik ausgeführt wird, die aus der Gruppe ausgewählt wird, zur der Giessen/Verdampfen, Beschichtung, Sputterdeposition, Flexografie-Deposition, Tauchschleuder-Deposition und Serigrafie-Deposition gehören.

9. Verfahren nach einem der Ansprüche 6 bis 8, **dadurch gekennzeichnet, dass** vor dem Schritt der Trocknung die Membran in eine Säurelösung getaucht und dann mit Wasser gewaschen wird.

10. Verfahren nach Anspruch 9, **dadurch gekennzeichnet, dass** die Säurelösung einen pH-Wert von unter 2 hat und dass die Eintauschdauer zwischen 15 Minuten und 48 Stunden beträgt.

11. Verfahren nach einem der Ansprüche 9 oder 10, **dadurch gekennzeichnet, dass** es sich bei der Säurelösung um eine Chlorwasserstoffsäure handelt, deren Konzentration zwischen 0,5 und 12 mol/L liegt.

## Claims

1. A membrane for a proton exchange membrane fuel cell comprising, by weight with respect to the total weight of the membrane, a mixture of:

   - from 50 to 95% of polymer A; and
   - from 5 to 50% by weight of polymer B;

   A being a fluorinated cation exchange polymer, comprising groups selected from the group comprising groups $-SO_3^-X^+$; $-PO_3^-X^+$; and $-COO^-X^+$; X being a hydrogen atom or a cation; and
   B being a hydrocarbon aromatic polymer different from polymer A, and comprising at least one aromatic ring on its polymer chain, B being functionalized with sulfonic acid groups $-SO_3H$.

2. The membrane for a proton exchange membrane fuel cell of claim 1, ***characterized* in that** polymer A has a molecular weight in the range from 10,000 to 10,000,000 g/mol and **in that** polymer B has a molecular weight in the range from 1,000 to 200,000 g/mol.

3. The membrane for a proton exchange membrane fuel cell of claim 1 or 2, ***characterized* in that** polymer A is a sulfonic perfluorinated polymer of formula:

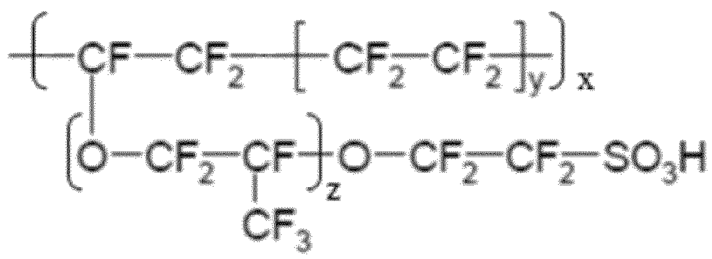

with x = from 100 to 1,000; y = from 3.5 to 7.5, and z = from 0 to 3.

**4.** The membrane for a proton exchange membrane fuel cell of any of claims 1 to 3, ***characterized* in that** polymer B is selected from the group comprising polyarylenes; ether polyarylenes; fluorinated ether polyarylenes; polysulfones; polybenzimidazoles; poly(ether ketones), poly(ether ketone ketones), poly(ether ether ketones); poly(ether sulfones); poly(ether imides); polycarbonates; poly-2,6-dimethyl phenylene oxide; polyamide-imide; polypyromellitimide.

**5.** The membrane for a proton exchange membrane fuel cell of any of claims 1 to 4, ***characterized* in that** the membrane comprises from 70 to 95% by weight of polymer A and from 5 to 30% by weight of polymer B.

**6.** A method of preparing the membrane of any of claims 1 to 5, comprising the steps of:

- preparing a solution of polymers A and B in at least one solvent;
- shaping the membrane from the solution of polymers A and B;
- evaporating the at least one solvent;
- drying the membrane.

**7.** The method of claim 6, ***characterized* in that** the solvent is selected from the group comprising N-methyl-2-pyrrolidone; N,N-dimethylacetamide; dimethylformamide; dimethylsulfoxide; and water/alcohol mixtures.

**8.** The method of any of claims 6 and 7, ***characterized* in that** the shaping of the membrane is performed according to a technique selected from the group comprising casting-evaporation; coating; sputter deposition; flexography deposition; spin coating; and silk-screening deposition.

**9.** The method of any of claims 6 to 8, ***characterized* in that**, prior to the drying step, the membrane is immersed in an acid solution, and then washed in water.

**10.** The method of claim 9, ***characterized* in that** the acid solution has a pH lower than 2, and **in that** the immersion time is in the range from 15 minutes to 48 hours.

**11.** The method of any of claims 9 or 10, ***characterized* in that** the acid solution is a hydrochloric acid solution having a concentration in the range from 0.5 to 12 mol/L.

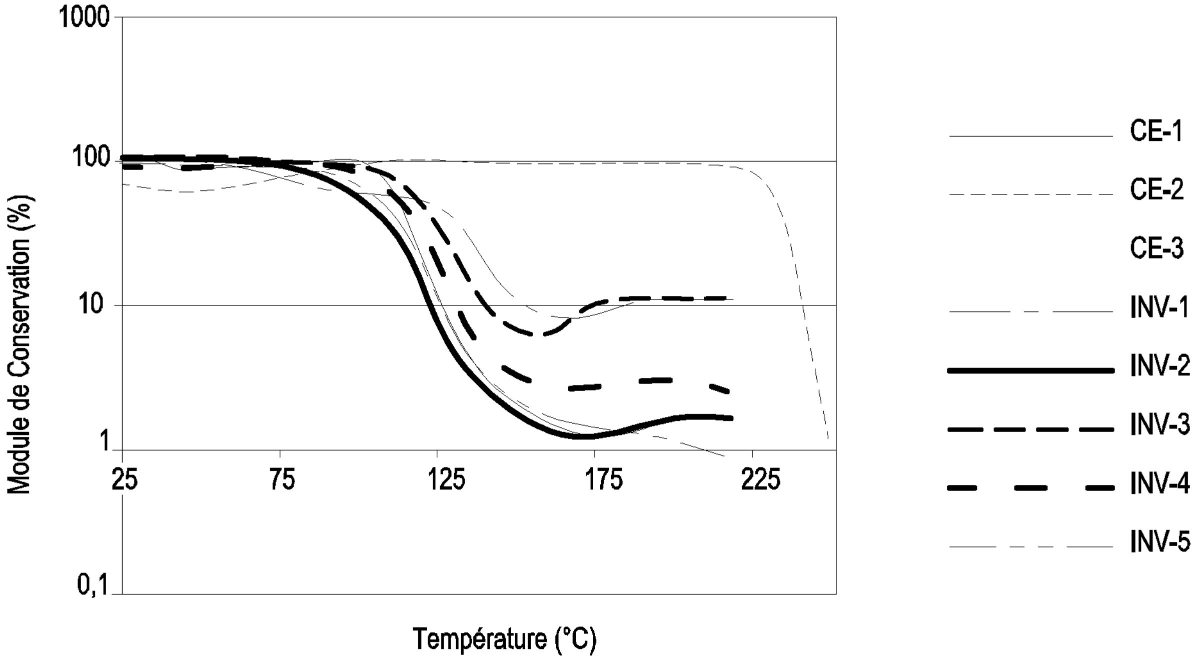
1000
100
10
1
0,1
Module de Conservation (%)
25
75
125
175
225
Température (°C)
CE-1
CE-2
CE-3
INV-1
INV-2
INV-3
INV-4
INV-5

Fig. 1

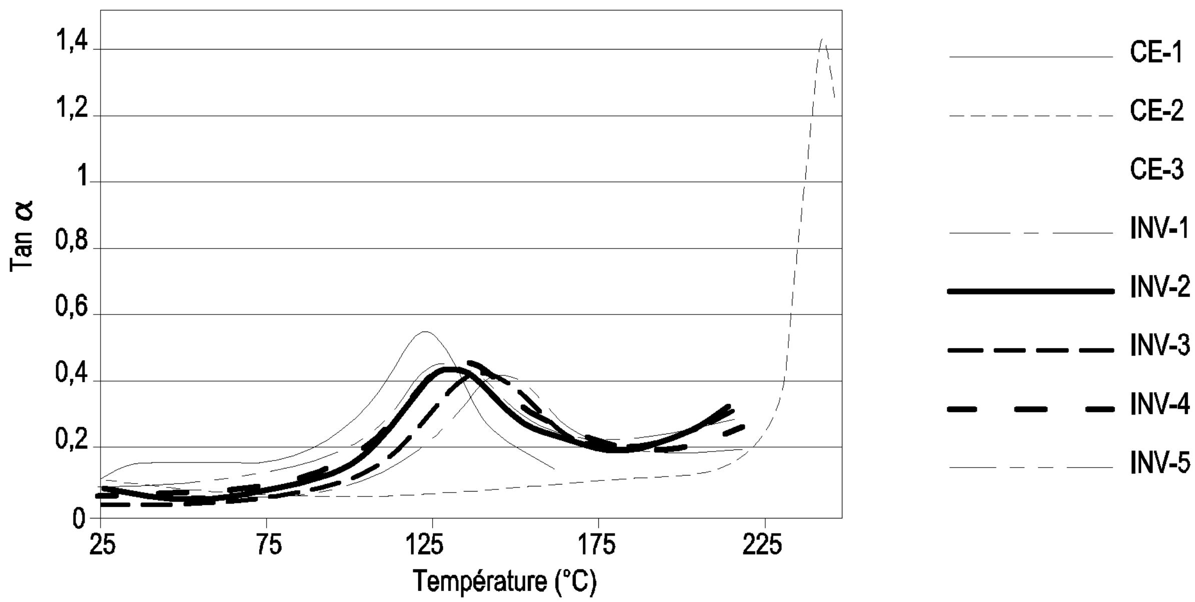
1,4
1,2
1
0,8
0,6
0,4
0,2
0
Tan α
25
75
125
175
225
Température (°C)
CE-1
CE-2
CE-3
INV-1
INV-2
INV-3
INV-4
INV-5

Fig. 2

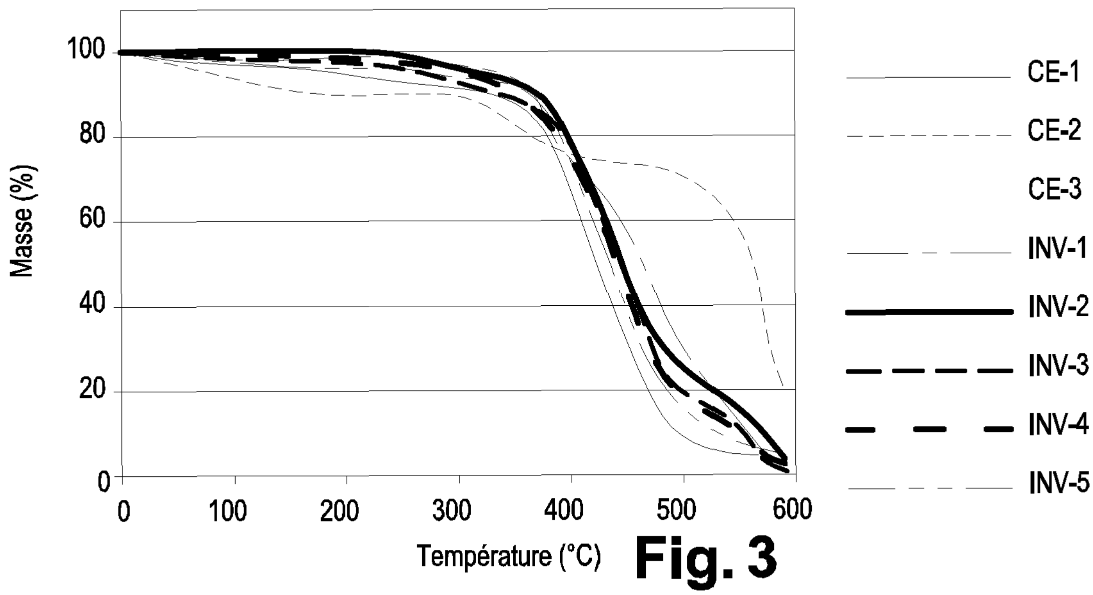


Fig. 3

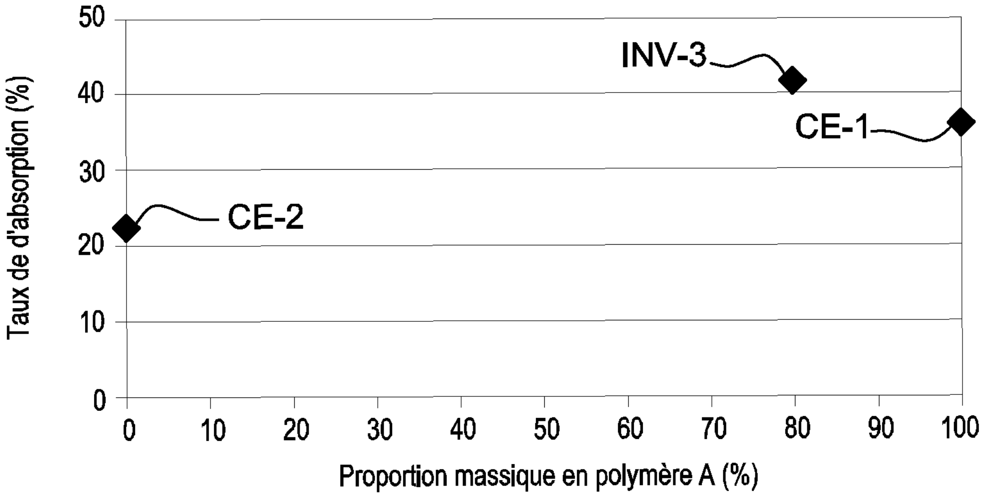


Fig. 4

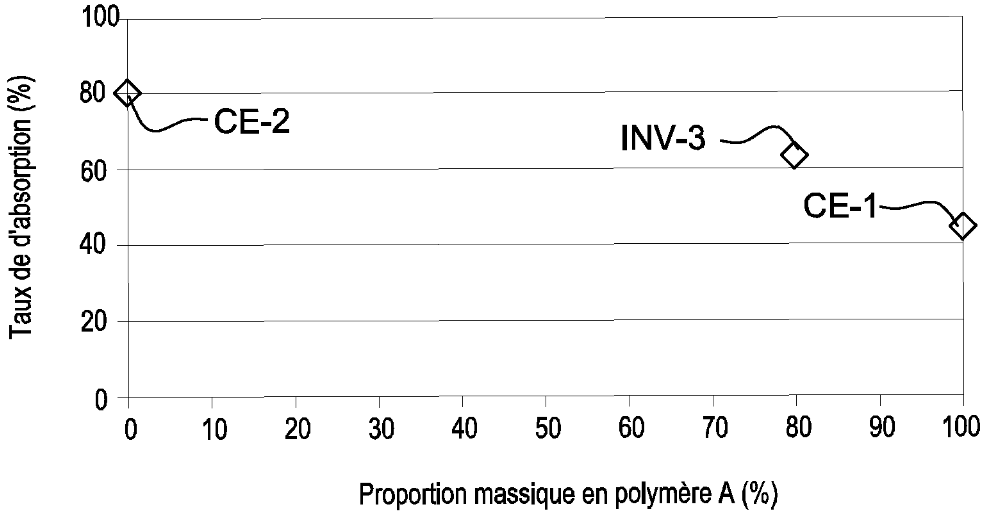


Fig. 5

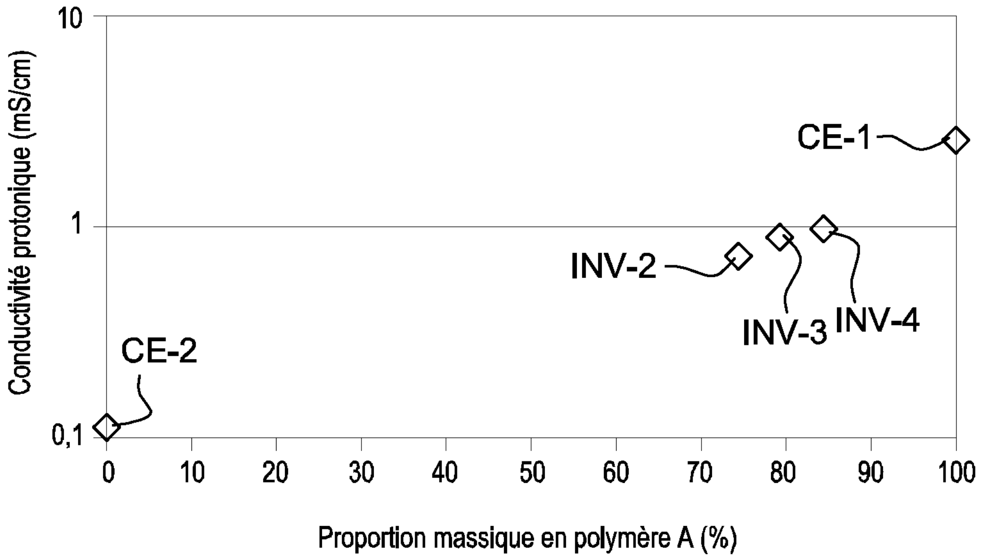
10
1
0,1
Conductivité protonique (mS/cm)
CE-1
INV-2
INV-3
INV-4
CE-2
0
10
20
30
40
50
60
70
80
90
100
Proportion massique en polymère A (%)

**Fig. 6**

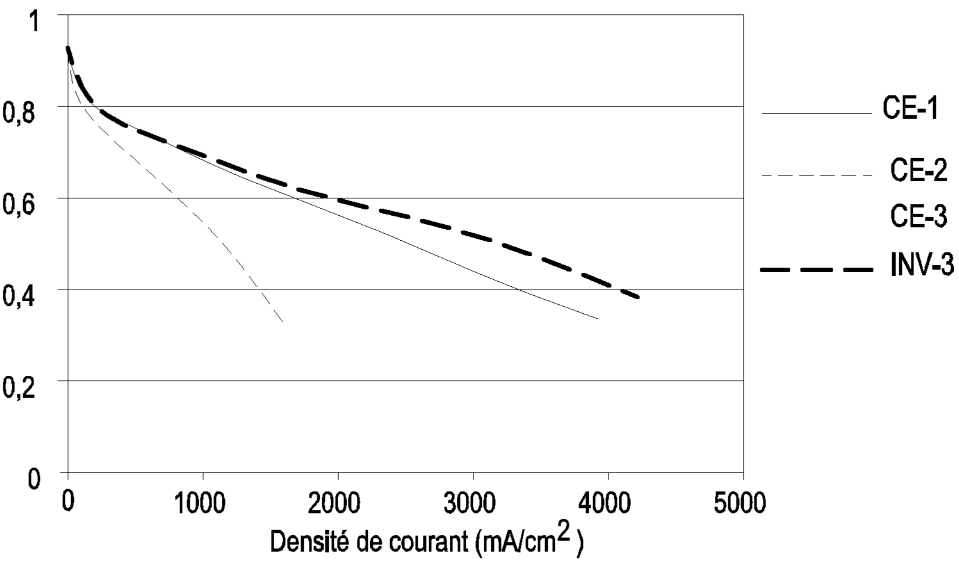
1
0,8
0,6
0,4
0,2
0
0
1000
2000
3000
4000
5000
Densité de courant (mA/cm2 )
CE-1
CE-2
CE-3
INV-3

**Fig. 7**

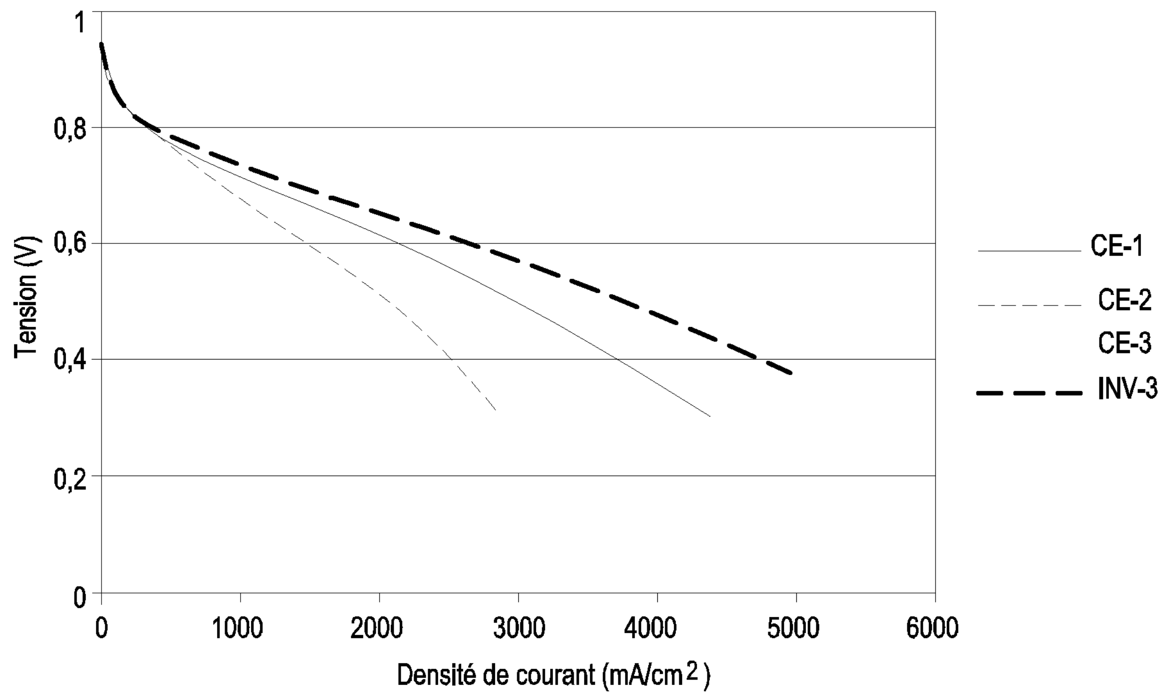
1
0,8
0,6
0,4
0,2
0
Tension (V)
0
1000
2000
3000
4000
5000
6000
Densité de courant (mA/cm2 )
CE-1
CE-2
CE-3
INV-3

**Fig. 8**

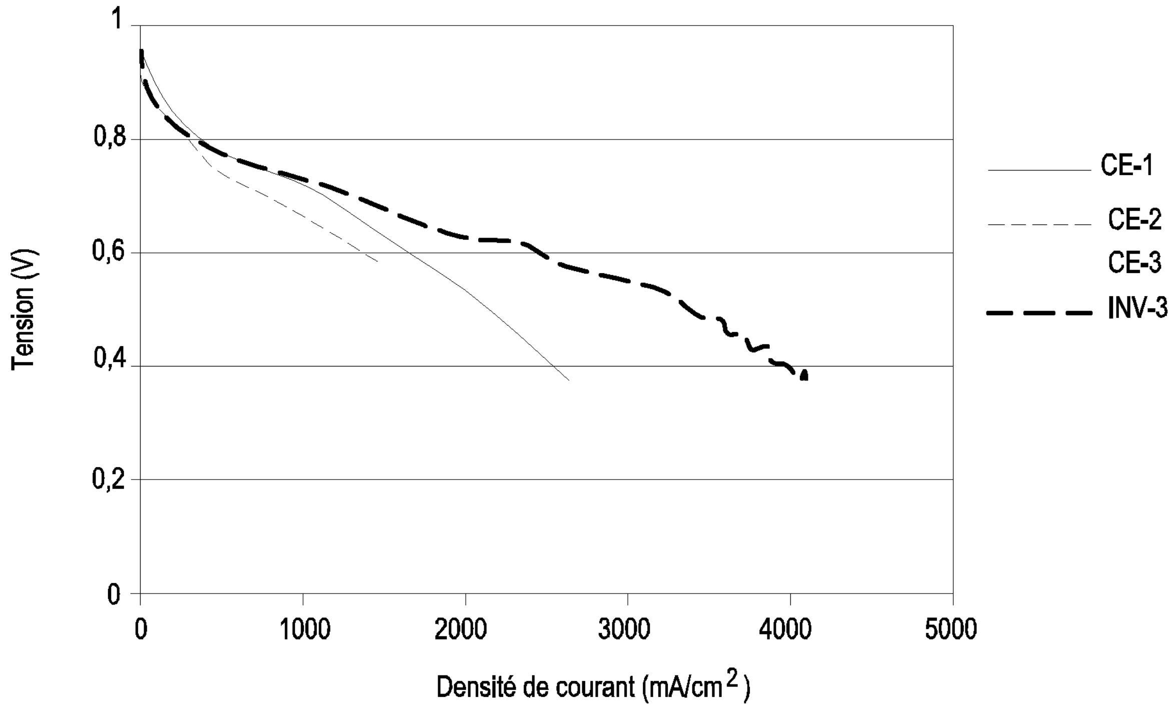
1
0,8
0,6
0,4
0,2
0
Tension (V)
0
1000
2000
3000
4000
5000
Densité de courant (mA/cm2 )
CE-1
CE-2
CE-3
INV-3

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2011035795 A

### Littérature non-brevet citée dans la description

- *Journal of Power Sources,* 2010, vol. 195, 3077-3083
- *CHEMICAL ABSTRACTS,* 31175-20-9
- *CHEMICAL ABSTRACTS,* 29658-26-2